# EUROPÄISCHE PATENTANMELDUNG

(11) **EP 4 190 749 A1**
(43) Veröffentlichungstag der Anmeldung: **07.06.2023**
(21) Anmeldenummer: 21211610.7
(22) Anmeldetag: 01.12.2021
(51) Int. Cl.: C01B 33/025, C01B 33/027, C01B 32/956

(54) **HERSTELLUNG VON VERBUNDWERKSTOFFEN MITTELS PYROLYSE EINES KOHLENSTOFF- ODER SILIZIUMPULVER-POLYCHLORSILANGEMISCHES**

(71) Anmelder: Evonik Operations GmbH, 45128 Essen (DE)
(72) Erfinder: Die Erfindernennung liegt noch nicht vor
(74) Vertreter: Evonik Patent Association

(57) **Zusammenfassung**

Gegenstand der Erfindung ist ein Verfahren zur Herstellung eines Silizium aufweisenden Verbundwerkstoffes, gekennzeichnet durch die Schritte (A) Bereitstellung einer Paste enthaltend Kohlenstoffpulver und zumindest ein Polychlorsilan, oder Siliziumpulver und zumindest ein Polychlorsilan, (B) Aufbringen der Paste auf einen elektrisch leitenden oder halbleitenden Träger, und anschließend (C) Pyrolyse der Paste auf dem Träger, wobei der Verbundwerkstoff erhalten wird.

## Beschreibung

Die vorliegende Erfindung bezieht sich sowohl auf ein Produkt als auch ein Verfahren zum Herstellen von preiswertem Anodenmaterial für Li+-Batterien bzw. Si-Luft-Batterien. Zur Herstellung wird, erstens, Kohlenstoffpulver bzw. Siliziumpulver mit einem oder mehreren Polychlorsilanen zu einer Paste gemischt. Diese Paste wird in einem zweiten Schritt auf einen Anodenträger aufgebracht, und in einem dritten Schritt wird durch Pyrolyse ein Verbundwerkstoff erhalten.

### Technisches Umfeld

Eines der großen politischen Ziele auf europäischer und deutscher Ebene ist die Dekarbonisierung des Verkehrs. Der Einsatz von fossilen, überwiegend flüssigen Kraftstoffen wie Diesel und Benzin soll hierbei durch emissionsärmere Kraftstoffe ersetzt werden.

Aktuell wird ein immer stärkerer Fokus auf sogenannte erneuerbare, nicht-biogene Kraftstoffe gesetzt, die Strom (bevorzugt aus erneuerbaren Energien) nutzen. Hierbei sollte der Wirkungsgrad der Umwandlungskette möglichst hoch sein und die Attribute aufweisen:
1.) maximale Emissionsminderung gegenüber fossilen Kraftstoffen;
2.) Vermeidung negativer Sekundäreffekte wie Monokulturen, Landverbrauch, Überdüngung u.ä.;
3.) hohe Energiedichte und Speicherbarfähigkeit;
4.) Gewährleistung lokaler Verfügbarkeit, sowie Nutzung bestehender Infrastrukturen, z. B. Tankstellen, zur Vermeidung von Kosten;
5.) wirtschaftliche Herstellung und eine möglichst wirtschaftliche Nutzung durch den Verbraucher.

Der spezifische Energiegehalt des Halbmetalls Silizium als Batteriebrennstoff beträgt rund 9 kWh/kg.

Silizium wird in großen Mengen weltweit hergestellt und ist breit verfügbar. Es kann nach dem Stand der Technik bis hin zu höchsten Reinheiten gewonnen werden. Die Darstellung erfolgt über die carbothermische Reduktion von Quarzkies mit Koks/Holzschnitzel im Elektroschachtofen. Hierbei wird überwiegend elektrische Energie für die Reduktion eingesetzt, die insbesondere aus erneuerbaren Quellen, beispielsweise aus Wind, Sonne, Wasser, Geothermie oder Biomasse, bereitgestellt wird - so, wie es z. B. in Norwegen aktuell der Fall ist.

Die Herstellung von metallurgischem Silizium ist lange bekannt. Das Material steht in standardisierten Qualitäten in Mengen um etwa 1,4 Mio t pro Jahr zur Verfügung. Die verschiedenen Zusammensetzungen von Silizium hängt einerseits von den eingesetzten Rohstoffen und andererseits von der beabsichtigten Anwendung ab.

Aus der Schmelze gewonnene Siliziumblöcke, sogenanntes "mg-Si" oder aus anderen Herstellverfahren erhaltenes Silizium wird zunächst unter Verwendung von Quarz und Kohlenstoff in einem carbothermischen Schmelzverfahren gewonnen. Das "mg-Si" wird zu sogenannten "Chunks" zerschlagen oder geeignet granuliert. Die Bruchstücke oder Granulate dienen in dieser Form als Ausgangsmaterial für den nächsten Schritt, nämlich der Herstellung von Silanen. Diese Herstellung kann zum Beispiel eine Synthese über die dem Fachmann bekannte (Chlor-)Silanroute sein.

Silizium hoher Reinheit wird üblicherweise aus metallurgischem Silizium durch Reaktion des Siliziums mit Chlorwasserstoff unter Bildung von Trichlorsilan sowie anderen Silanen hergestellt. Hierzu werden die Silane nach einer Destillation und Trennung von den anderen Produkten und Verunreinigungen an beheizten Reinstsiliziumstäben in Silizium und andere Produkte zersetzt, wobei sich das Silizium an den Reinstsiliziumstäben niederschlägt (Siemens Verfahren). Beispielhaft sei an dieser Stelle die Trichlorsilansynthese genannt. Doch ist die Herstellung von Polysilizium auch auf anderem Wege z. B. in der Monosilanroute dem Fachmann bekannt.

Im bisherigen Stand der Technik sind aufwendige Schritte zur Aufreinigung erforderlich, bis man letztlich zum Produkt Silizium kommt.

Es stellt sich somit die Aufgabe, ein Aktivmaterial bereitzustellen, welches die oben genannten Attribute erfüllt, also umweltfreundlich ist und sich wirtschaftlich preiswert bereitstellen lässt.

### Beschreibung der Erfindung

Überraschend wurde gefunden, dass sich die Aufgabe durch den Einsatz einer Paste und deren Pyrolyse lösen lässt, wobei die Paste Polychlorsilan oder Polychlorsilane und wahlweise Kohlenstoffpulver oder Siliziumpulver enthält.

Im Fall des Kohlenstoffpulvers stellt die Paste eine preiswerte "pulververbindende Aufbereitung" von metallischem Silizium bzw. von Siliziumprodukten für die Nutzung als Silizum-Kohlenstoff-Komposit-Anode (Produkt) dar, wobei die Siliziumprodukte aus dem beispielhaft durch Zersetzung von PCS gewonnen Siliziumkörper, im Wesentlichen halbmetallische Bestandteile und Kohlenstoff enthaltende Silizium-Partikel sind, besonders vorteilhaft metallische Begleiter aufweisen, mit Anteilen bis zu etwa 1 %.

Analoges gilt für den Fall des Siliziumpulvers. Dann wirkt oder wirken PCS als Verbindungskleber unter Erhaltung der Partikelstruktur. In dem erfindungsgemäßen Verfahren kann das Siliziumpulver zu einer Silizium-Komposite-Anode weiter verarbeitet werden, welche in einem Energiewandler unter (1) Speicherung elektrischer Energie durch Wanderung von Li-Ionen bzw. (2) elektrischer Energie durch Umwandlung zu Siliziumdioxid (SiO₂) freigesetzt wird. Hierbei wird Exergie freigesetzt, die in Form von elektrischer Energie anfällt. Auf diesen Prinzipien funktionierende Batterien sind für viele Anwendungsfelder geeignet. Vorzugsweise können solche Batterien zum Antrieb von Fahrzeugen aller Art genutzt werden, insbesondere von PKW, LKW, Bussen, deren Antrieb zumindest teil- oder zeitweise mittels eines Elektromotors erfolgt.

Im Rahmen der Erfindung wird unter "Polychlorsilan", abgekürzt "PCS", ein Silan mit mindestens 2 Siliziumatomen und mindestens 2 Chloratomen verstanden.

Gegenstand der Erfindung ist demnach ein Verfahren zur Herstellung eines Silizium aufweisenden Verbundwerkstoffes, gekennzeichnet durch die Schritte
(A) Bereitstellung einer Paste enthaltend
   Kohlenstoffpulver und zumindest ein Polychlorsilan, oder
   Siliziumpulver und zumindest ein Polychlorsilan,
(B) Aufbringen der Paste auf einen elektrisch leitenden oder halbleitenden Träger, und anschließend
(C) Pyrolyse der Paste auf dem Träger, wobei der Verbundwerkstoff erhalten wird.

Bei der konventionellen thermischen Pyrolyse von Silanen und Kohlenwasserstoffen, z. B. von Monosilan und Ethin zu Silizium-Kohlenstoff-Kompositepulver, hat man den Nachteil, dass Teilchen in der gewünschten Größe von wenigen Nanometern nur unter sehr sorgfältig einzustellenden Bedingungen und dann auch nur zu einem gewissen Bruchteil des umgesetzten Materials erhalten werden. Ein übriger, erheblicher Anteil bildet typischerweise unerwünschte Kristalle, die sich an den Wänden des Umsetzungsgefäßes bzw. Reaktors absetzen und dort fest anhaften. Dieser Belag muß regelmäßig unter hohem Aufwand entfernt werden.

Dem gegenüber hat das erfindungsgemäße Verfahren den Vorteil, sehr preisgünstig zu sein. Während der Durchführung des Verfahrens bildet sich eine stabile Zone aufgrund der Grenzflächenspannungen zwischen flüssiger und fester Siliziumphase sowie aufgrund der Oberflächenspannung aus. Dadurch hat das Verfahren den weiteren Vorteil, dass die sich bildenden Siliziumpartikel simultan während der erfindungsgemäß durchgeführten Pyrolyse durch Metallanteile dotiert werden können.

Der nach der Pyrolyse im erfindungsgemäßen Verfahren erhaltene Verbundwerkstoff lässt sich als Kompositmatrix auffassen, die zumindest Silizium, gegebenenfalls Kohlenstoff enthaltende Partikel, wie zum Beispiel Siliziumcarbid und/oder amorphes Silizium aufweist. Außerdem können metallische und halbmetallische Bestandteile sowie Stickstoff und Sauerstoff enthalten sein.

Falls im Schritt (A) Kohlenstoffpulver eingesetzt wird, ist Ruß, Leitruß oder Graphitpulver bevorzugt. Besonders bevorzugt wird Graphitpulver oder Leitruß eingesetzt, das zusammen mit zumindest einem Polychlorsilan zu einer Paste vermischt wird. Die Vermengung der Komponenten Ruß oder Graphitpulver und Polychlorsilan oder Polychlorsilanen zu einer Paste ist dem Fachmann bekannt.

Des Weiteren kann im Schritt (A) ein solches Polychlorsilan eingesetzt werden, das wegen seines hohen Metallgehaltes keine Verwendung in der Halbleiterindustrie oder in der Photovoltaik findet. Derart verunreinigte Polychlorsilane fallen beispielsweise bei der Herstellung von Hexachlordisilan, abgekürzt "HCDS", an.

Falls im Schritt (A) Siliziumpulver eingesetzt wird, kann dieses Pulver aus Rohsilizium (Si MG) gewonnen sein. Vorzugsweise kann Siliziumpulver ausgewählt sein, das bei den Sägevorgängen während der Herstellung von Si-Wafern als pulverförmiger Abfall anfällt.

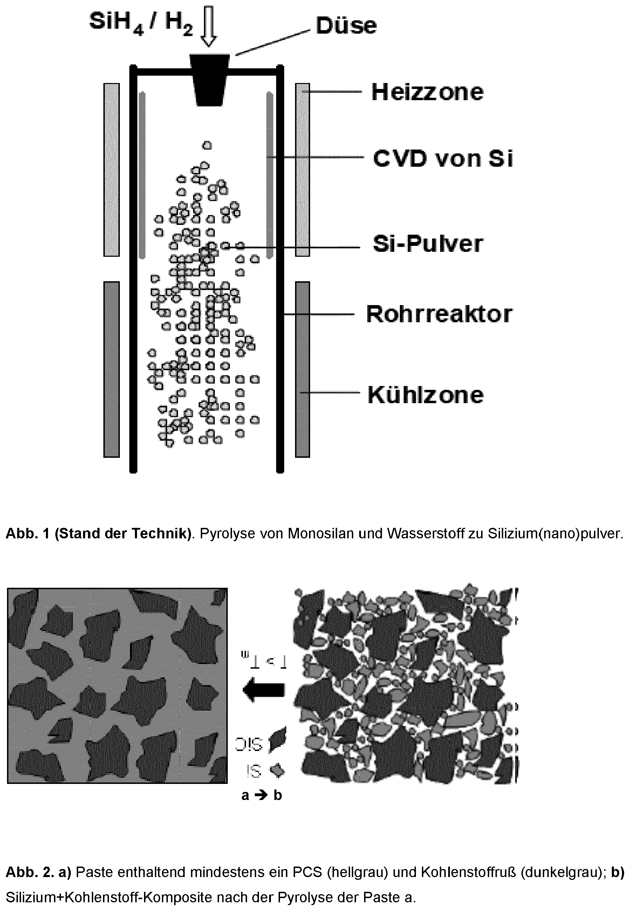

Weiterhin bevorzugt kann solches Siliziumpulver eingesetzt werden, das aus Pyrolysevorgängen erhalten worden ist, beispielsweise bei der Pyrolyse von Monosilan und Wasserstoff in einem Rohrreaktor, schematisch dargestellt in **Abb. 1**.

Weiterhin kann es vorteilhaft sein, Siliziumpulver mit einer mittleren Partikelgröße von 10 nm bis 1000 nm einzusetzen.

Im Anschluß an die Pyrolyse im Schritt (C) können der Träger und das pyrolysierte Material in einer nachfolgenden Quenchzone abgekühlt werden.

Vorzugsweise kann bei der Bereitstellung der Paste ein fachübliches Benetzungsmittel eingesetzt werden, um die Viskosität und/oder Homogenität der Paste einzustellen. Besonders ist oder sind solche Benetzungsmittel bevorzugt, das oder die während der Pyrolyse im Schritt (C) aus der Paste entweichen oder ausgetrieben werden, ohne Umsetzungsreaktionen mit den übrigen Komponenten der Paste einzugehen.

Es kann vorteilhaft sein, den mit der Vermengung einhergehenden Energieeintrag derart zu begrenzen, dass Umsetzungsreaktionen der Polychlorsilane untereinander bzw. mit dem Kohlenstoffpulver oder Siliziumpulver vermieden sind.

Im Schritt (B) wird die Paste auf einen elektrisch leitenden oder halbleitenden Träger aufgebracht, bevorzugt als Film oder Schicht, vorzugsweise durch Rakeln, Sprühen, Walzen, oder mittels jeder anderen bei der Verarbeitung von Pasten fachüblichen Vorgehensweise. Die Paste kann vorzugsweise auf eine Metallfolie, eine Elektrode oder strukturierte Elektrode aufgebracht werden, die beispielsweise in einer Sekundärbatterie verwendet wird. Die Paste kann auch auf jede andere Struktur aufgebracht werden, die einen leitenden oder halbleitenden Träger aufweist. Die Struktur kann ebenfalls freitragend oder auf einem Grundmaterial, z. B. einer Platine, fixiert sein. Somit können nach Abschluß des Schrittes (C) elektronische Schaltungen realisiert sein.

Im Schritt (C) des erfindungsgemäßen Verfahrens wird die Paste einer Pyrolyse unterworfen. Die Pyrolyse kann durch Einbringen thermischer Energie, zum Beispiel mittels Gasflamme (Chlor-Wasserstoffbrenner) oder Infrarotstrahlung durchgeführt werden. Weiterhin bevorzugt kann die Pyrolyse in einem Tunnelofen oder mittels elektromagnetischer Bestrahlung, besonders bevorzugt mittels Laserbestrahlung durchgeführt werden. Das Spektrum des eingestrahlten Lichtes kann entsprechend den Absorptionseigenschaften der Komponenten in der Paste ausgewählt sein.

Während der Pyrolyse im Schritt (C), die vorzugsweise bei Temperaturen größer oder gleich 200 °C durchgeführt wird, wirkt das PCS als Precursor. Das PCS oder PCS Gemisch wandelt sich während der Pyrolyse in besonders vorteilhafter Weise zu einer Siliziummatrix um. Das Chlor gast während Schritt (C) aus. Nach der Pyrolyse ist auf dem Träger ein Rückstand erhalten, der zumindest Silizium, Kohlenstoff enthaltende Partikel, wie zum Beispiel Siliziumcarbid und/oder Ruß, und metallische sowie halbmetallische Bestandteile aufweist. Die Siliziummatrix enthält außerdem Stickstoff und Sauerstoff. Wurde im Schritt (A) Graphitpulver eingesetzt, weist der pyrolysierte Rückstand Silizium infiltrierten Kohlenstoff auf. Wurde im Schritt (A) Ruß eingesetzt, bleibt nach der erfindungsgemäßen Pyrolyse einer in (A) erhaltenen PCS-Ruß-Paste wenigstens eine Matrix aus Silizium und Kohlenstoff sowie Siliziumkarbid mit weiteren Verunreinigungen, insbesondere metallischen Verunreinigungen, zurück.

Der erfindungsgemäße Verbundwerkstoff weist vorzugsweise eine Dichte von 800 bis 2200 g/l, besonders bevorzugt eine Dichte von 1100 g/l auf.

Gegenstand der Erfindung ist demnach ebenfalls ein Verbundwerkstoff, aufweisend
(i) Silizium und metallische sowie halbmetallische Bestandteile, Stickstoff und Sauerstoff, oder
(ii) Silizium und metallische sowie halbmetallische Bestandteile, Stickstoff und Sauerstoff, und Kohlenstoff enthaltende Partikel, und Silizium infiltrierter Kohlenstoff oder
(iii) eine Matrix aus Silizium und Kohlenstoff, und Siliziumkarbid.

Liegt der erfindungsgemäße Verbundwerkstoff gemäß (ii) oder (iii) vor, kann dieser Verbundwerkstoff vorzugsweise Siliziumcarbid und/oder Ruß enthalten.

Es wurde gefunden, dass der erfindungsgemäße oder erfindungsgemäß erhaltene Verbundwerkstoff als Silizium-Komposite-Anode verwendet werden kann.

Falls im Schritt (A) Kohlenstoffpulver eingesetzt wird, ist der nach dem erfindungsgemäßen Verfahren erhaltene Verbundwerkstoff als Anodenmaterial in Batterien einsetzbar, das eine mit üblichen Batterien vergleichbare Performance aufweist. Dies gelingt überraschend einfach durch Mischen von Graphitpulver mit Polychlorsilangemisch (PCS) zu einer Paste und Aufbringen auf einem Anodenträger im Schritt (B). Vorzugsweise kann eine solche Paste auf eine Metallfolie kontinuierlich mittels eines mechanischen Antriebs aufgerakelt werden. Im anschließenden Schritt (C) wird die Paste auf der Metallfolie zu dem siliziuminfiltrierten Kohlenstoff zersetzt, vorzugsweise thermisch, besonders bevorzugt in einem Tunnelofen oder vorzugsweise mittels Laserbestrahlung.

Die Schritte (A), (B) und (C) können einzeln oder in ihrer verfahrensgemäßen Reihenfolge kontinuierlich durchgeführt werden. Das erfindungsgemäße Verfahren erlaubt deshalb vorteilhaft die kontinuierliche Herstellung des jeweils erhaltenen Anodenmaterials.

Somit ist gleichfalls Gegenstand der Erfindung die Verwendung des Verbundwerkstoffes oder des verfahrensgemäß erhaltenen Verbundwerkstoffes
- als Anodenmaterial für Li-Ionen-Batterien, falls im Schritt (A) Kohlenstoffpulver eingesetzt worden ist, oder
- als Siliziumanodenmaterial für Si-Batterie-Zellen, falls im Schritt (A) Siliziumpulver eingesetzt worden ist.

Die Erfindung wird im Folgenden anhand der folgenden Beispiele näher erläutert.

| Einwaage | Beispiel 1 | Beispiel 2 | Beispiel 3 | Beispiel 4 |
|---|---|---|---|---|
| Si-(mg) | 174 | 310 | 33 | 19,7 |
| Carbon (mg) | 10 | 10 | 5 | 30 |
| Anteil (Carbon) in Gew.-% | 5% | 3% | 13% | 60% |
| Perchlorsilan (mL) | 5 | 7 | 0,5 | 0,5 |

Die Tabelle gibt eine Übersicht bezüglich der Rezeptur für die Beispiele 1 bis 4: Beispiel 1 und Beispiel 2 sind erfinderische Beispiele für ein Siliziumkomposit, wogegen Beispiel 3 und Beispiel 4 erfinderische Beispiele als Anodenmaterial für Li-Ionen Batterien darstellen.

Unter "Polychlorsilane" werden solche Silane verstanden, deren Moleküle mindestens 2 Siliziumatome und mehr als 2 Chloratome aufweisen: Hexachlordisilan abgekürzt HCDS zählt hierzu. Polychlorsilane, deren Moleküle mehr als 2 Siliziumatome und mindestens 3 Chloratome aufweisen sind im Rahmen der Erfindung Octachlortrisilane, abgekürzt "OCTS", Decachlortetrasilan, abgekürzt "DCTS", Dodecachlorpentasilan, abgekürzt "DCPS", sowie deren Strukturisomere. Das verwendete Polychlorsilangemisch bestand aus 30 mol-% Si=2, 20 mol-% Si=3, 31 mol-% Si=4 sowie 14 mol-% Si=5. Die Analyse der Zusammensetzung erfolgt mittels der dem Fachmann bekannten Si-NMR-Analyse (https://www.bruker.com/de/services/training/magnetic-resonance/nmr-trainings.html).

### Beispiel 1. Verbundwerkstoff für eine Si-Primär-Batterie.

Unter Stickstoffatmosphäre wurden 2 Milliliter PCS Gemisch mit 10 mg Vulcanruß sowie 174 mg Siliziumpulver versetzt und gemörsert, um einen guten Kontakt zwischen den Polychlorsilanen und dem Leitruß sowie den Siliziumpartikeln zu gewährleisten. Anschließend wurde durch eine weitere Zugabe von nach und nach 3 Milliliter PCS Gemisch die dabei erhaltene Mischung im Mörser weiter zu einer streichfähigen Paste verrieben. Diese Paste wurde in den Anodenraum einer Batterie (verzinktes Eisenblech) gegeben, glattgestrichen, wobei der "Grünling" erhalten wurde, und anschließend in einem Ofen bei 600 C unter inerter Atmosphäre (Stickstoff) erwärmt, wobei der Verbundwerkstoff erhalten wurde. Dabei wurde das Ofengas zirkuliert und das während des Pyrolyseprozesses im Ofen freigesetzte Chlor abgezogen. Nach dem kein Chlor mehr freigesetzt wird, kann das Device abgekühlt werden. Der gewonnene Verbundwerkstoff kann offen an Luft gehandhabt werden.

Dass beim Grünling eine hinreichende Leitfähigkeit in der erfindungsgemäß eingesetzten Paste vorlag, konnte dadurch gezeigt werden, dass während einiger Messungen der Anpressdruck verändert wurde. Dies hatte für die Leitfähigkeit keine Änderung zur Folge.

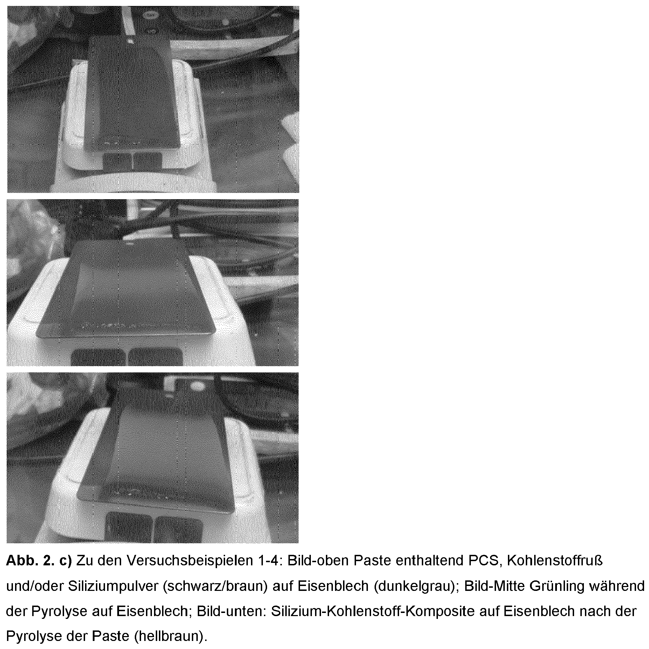

Die **Abb. 2a und Abb. 2b** illustrieren schematisch die Erfindung mit Umwandlung der Paste zu Anodenmaterial mittels Pyrolyse. **Abb. 2c** zeigt dazu die Photo-Dokumentation zu den allgemeinen Prozessschritten aufrakeln oder aufstreichen der erfinderischen Pasten auf einen Metallträger, Pyrolysevorgang sowie erhaltend eine Komposit-Elektrode für die Beispiele 1 und 2: Bild-oben Paste enthaltend PCS, Kohlenstoffruß und/oder Siliziumpulver (schwarz/braun) auf Eisenblech (dunkelgrau) aufgestrichen; Bild-Mitte Elektroden-Grünling während der Pyrolyse; Bild-unten: Silizium-Kohlenstoff-Komposite auf Eisenblech nach der Pyrolyse der Paste (hellbraun).

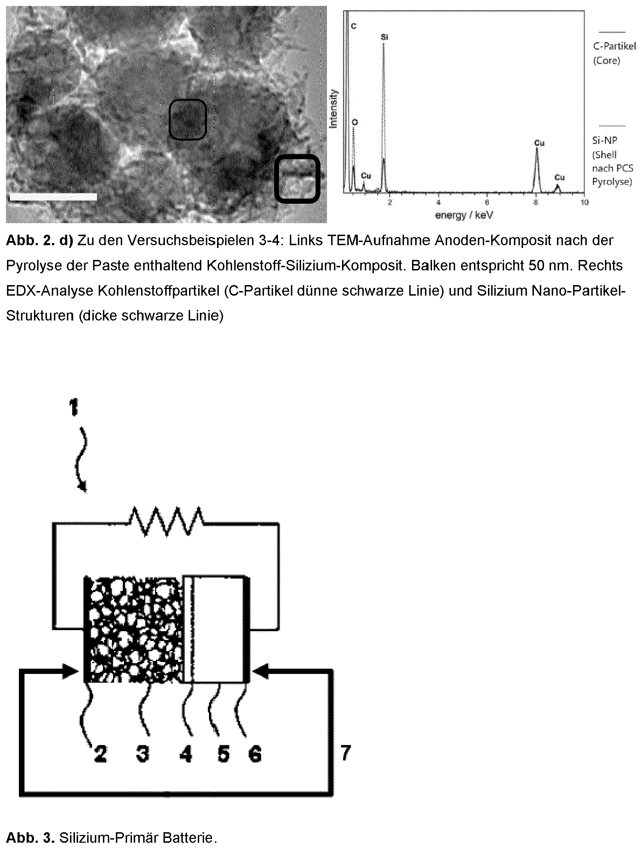

Nach der Pyrolyse wurde in keinem Fall eine nennenswerte Verschlechterung der elektrischen Eigenschaften beobachtet. Das Device wurde in eine Versuchszelle verbaut. Die so gefertigte Si-Primär-Batterie zeigt schematisch die **Abb. 3****.** Der erfindungsgemäße Verbundwerkstoff war vor der Fertigstellung der Batterie in einem weiteren Schritt zusätzlich mit einem Elektrolyten imprägniert worden (in der **Abb. 3** nicht gezeigt). Das Imprägnieren mit Elektrolyten und die Auswahl desselben sind dem Fachmann bekannt.

Die Hinweiszeichen bedeuten:
1 Ohmscher Lastwiderstand
2 Anodischer Stromsammler
3 erfindungsgemäßer Verbundwerkstoff, aufweisend Si-SiC-C
4 Löschpapier als Separator, imprägniert mit Elektrolyt
5 MnO₂-C als Kathode, imprägniert mit Elektrolyt
6 Kathodischer Stromsammler
7 Klammer, ausübend einen mechanischen Druck auf die Batterie (2 - 6)

### Beispiel 2. Verbundwerkstoff für eine Si-Primär-Batterie.

Unter Stickstoffatmosphäre wurden 3,5 Milliliter PCS Gemisch mit 10 mg Vulcanruß sowie 310 mg Siliziumpulver versetzt und gemörsert, um einen guten Kontakt zwischen den Polychlorsilanen und dem Leitruß sowie den Siliziumpartikeln zu gewährleisten. Anschließend wurde durch eine weitere Zugabe von nach und nach 3,5 Milliliter PCS Gemisch die dabei erhaltene Mischung im Mörser weiter zu einer streichfähigen Paste verrieben. Diese Paste wurde in den Anodenraum einer Batterie (verzinktes Eisenblech) gegeben, glattgestrichen, wobei der "Grünling" erhalten wurde, und anschließend in einem Ofen bei 900°C unter inerter Atmosphäre (Stickstoff) erwärmt, wobei der Verbundwerkstoff erhalten wurde. Dabei wurde das Ofengas zirkuliert und das während des Pyrolyseprozesses im Ofen freigesetzte Chlor abgezogen. Nach dem kein Chlor mehr freigesetzt wird, dann das Device abgekühlt werden. Der gewonnene Verbundwerkstoff kann offen an Luft gehandhabt werden.

Mit den der nach Beispiel 1 bis 2 erhaltenen Elektroden wurden in einer Primärzelle mit KOH-Elektrolyt Stromdichten von über 1,1 mA/cm² bei einer Leerlaufspannung von 1,05 Volt (Anode nach Beispiel 1) bzw. 1,7 mA/cm² bei einer Leerlaufspannung von 1,1 Volt (Anode nach Beispiel 2) erhalten.

### Beispiel 3. Anodenmaterial für eine Lithium-Ionen-Batterie.

Unter Stickstoffatmosphäre wurden 0,2 Milliliter PCS Gemisch mit 5 mg Ruß sowie 33 mg Siliziumpulver versetzt und gemörsert, um einen guten Kontakt zwischen den Polychlorsilanen und dem Leitruß sowie den Siliziumpartikeln zu gewährleisten. Anschließend wurde durch eine weitere Zugabe von nach und nach 0,3 Milliliter PCS Gemisch die dabei erhaltene Mischung im Mörser weiter verrieben. Diese Paste wurde auf ein Carbon-Gitter gegeben und glattgestrichen, wobei der "Grünling" erhalten wurde, der anschließend in einem Ofen bei 600 C unter inerter Atmosphäre (Stickstoff) erwärmt, wobei dann erfinderisches Anodenmaterial erhalten wurde. Dabei wurde das Ofengas zirkuliert und das während des Pyrolyseprozesses im Ofen freigesetzte Chlor abgezogen. Nach dem kein Chlor mehr freigesetzt wird, wurde das gewonnen Material abgekühlt. Das so gewonnene Anodenmaterial kann offen an Luft gehandhabt werden. Durch Auswiegen konnte der Massenzuwachs an Silizium-Nanopartikeln auf ca. 108 mg bestimmt werden. Das Material wurde vermahlen und das so erhaltene Pulver in einer Li-Ionen-Versuchszelle getestet.

### Beispiel 4. Anodenmaterial für eine Lithium-Ionen-Batterie.

Unter Stickstoffatmosphäre wurden 0,2 Milliliter PCS Gemisch mit 30 mg Ruß sowie 19,7 mg Siliziumpulver versetzt und gemörsert, um einen guten Kontakt zwischen den Polychlorsilanen und dem Leitruß sowie den Siliziumpartikeln zu gewährleisten. Anschließend wurde durch eine weitere Zugabe von nach und nach 0,3 Milliliter PCS Gemisch die dabei erhaltene Mischung im Mörser weiter verrieben. Diese Paste wurde auf ein Carbon-Gitter gegeben und glattgestrichen, wobei der "Grünling" erhalten wurde, der anschließend in einem Ofen bei 900 C unter inerter Atmosphäre (Stickstoff) erwärmt, wobei das erfinderische Anodenmaterial erhalten wurde. Dabei wurde das Ofengas zirkuliert und das während des Pyrolyseprozesses im Ofen freigesetzte Chlor abgezogen. Nach dem kein Chlor mehr freigesetzt wird, kann das gewonnen Material abgekühlt werden. Der gewonnene Werkstoff kann offen an Luft gehandhabt und vermalen werden. Durch Auswiegen konnte der Massenzuwachs an Silizium-Nanopartikeln auf ca. 101 mg bestimmt werden. Das Material wurde vermahlen und das so erhaltene Pulver in einer Li-Ionen-Versuchszelle getestet.

**Abb. 2. d)** zeigt zu den Versuchsbeispielen 3-4 links eine TEM-Aufnahme des Anoden-Komposit nach der Pyrolyse der Paste enthaltend Kohlenstoff-Silizium-Komposit (Beispiel 4). Der Dimensionsbalken entspricht 50 nm. Das Bild rechts zeigt die EDX-Analyse im Bereich mit Kohlenstoffpartikel (C-Partikel Kontur mit dünner schwarzer Linie) und Silizium Nano-Partikel-Strukturen (Kontur mit dicker schwarzer Linie). Es ist zu erkenne, das sich Silizium-Nanopartikel wie an Perlenschüren aufgereiht um die Basispartikel und das Ganze ein Netzwerkgeflecht bildet.

## Patentansprüche

1. Verfahren zur Herstellung eines Silizium aufweisenden Verbundwerkstoffes,
**gekennzeichnet durch** die Schritte
(A) Bereitstellung einer Paste enthaltend Kohlenstoffpulver und zumindest ein Polychlorsilan, und/oder Siliziumpulver und zumindest ein Polychlorsilan,
(B) Aufbringen der Paste auf einen elektrisch leitenden oder halbleitenden Träger, und anschließend
(C) Pyrolyse der Paste auf dem Träger, wobei der Verbundwerkstoff erhalten wird.

2. Verfahren nach Anspruch 1, wobei im Schritt (A)
Ruß, Leitruß, Graphitpulver, oder
Siliziumpulver eingesetzt wird, das bei den Sägevorgängen während der
Herstellung von Si-Wafern als pulverförmiger Abfall anfällt, oder Siliziumpulver eingesetzt wird, das aus Pyrolysevorgängen erhalten ist,
vorzugsweise Siliziumpulver mit einer mittleren Partikelgröße von 10 nm bis 1000 nm.

3. Verfahren nach einem der vorhergehenden Ansprüche, wobei im Schritt (A) Benetzungsmittel eingesetzt wird oder werden, das oder die während der Pyrolyse im Schritt (C) aus der Paste entweichen oder ausgetrieben werden, ohne Umsetzungsreaktionen mit den übrigen Komponenten der Paste einzugehen.

4. Verfahren nach einem der vorhergehenden Ansprüche, wobei im Schritt (A) der mit der Vermengung einhergehende Energieeintrag derart begrenzt ist, dass Umsetzungsreaktionen der Polychlorsilane untereinander bzw. mit dem Kohlenstoffpulver oder Siliziumpulver vermieden sind.

5. Verfahren nach einem der vorhergehenden Ansprüche, wobei im Schritt (C) die Pyrolyse bei Temperaturen größer oder gleich 200 °C durchgeführt wird.

6. Verbundwerkstoff, aufweisend
(i) Silizium und metallische sowie halbmetallische Bestandteile, Stickstoff und Sauerstoff, oder
(ii) Silizium und metallische sowie halbmetallische Bestandteile, Stickstoff und Sauerstoff, und Kohlenstoff enthaltende Partikel, und Silizium infiltrierter Kohlenstoff oder
(iii) eine Matrix aus Silizium und Kohlenstoff, und Siliziumkarbid.

7. Verwendung des Verbundwerkstoffes gemäß Anspruch 6 oder erhalten gemäß des Verfahrens nach einem der Ansprüche 1 - 5,
- als Anodenmaterial für Li-Ionen-Batterien, falls im Schritt (A) Kohlenstoffpulver eingesetzt worden ist, oder
- als Siliziumanodenmaterial für Si-Batterie-Zellen, falls im Schritt (A) Siliziumpulver eingesetzt worden ist.
